# EUROPEAN PATENT APPLICATION

(11) **EP 1 253 533 A1**
(43) Date of publication of application: **30.10.2002**
(21) Application number: 01201463.5
(22) Date of filing: 23.04.2001
(51) Int. Cl.: G06F 17/60

(54) **System and method for providing a configurable service to a customer**

(71) Applicant: Koninklijke KPN N.V., 9726 AE Groningen (NL)
(72) Inventor: Nijdam, Willem Derk, 2242 AS Wassenaar (NL); Zabel, Huub, 3232 PE Brielle (NL); Heidenis, Jeroen, 2548 BR Den Haag (NL)
(74) Representative: Wuyts, Koenraad Maria

(57) **Abstract**

The present invention is related to a knowledge system for providing a configurable service to a customer, said knowledge system being compiled on a computer environment or stored on a memory carrier and comprising :
- a knowledge base comprising
   - representations of a number of business elements involved in the providing of said service, including representations of actors, of predetermined relations between said actors, of processes optionally having involved said actors, of input/output specifications for said processes, and
   - configurable key objects as representations of the business elements needed in the definition and/or configuration and/or realisation of said service;
- at least one predetermined event, each event triggering the execution of a predetermined set of said processes associated with said event and being executed according to a set of predetermined rules associated with said event, the execution defining a status of said service;
and wherein said key objects have a level of consonance with at least one other key object allowing the use and or adaptation of key objects being subsequently activated following the execution of said predetermined set of processes triggered by said event, the adaptation being done according to the contents of a previous key object in the execution of said predetermined set of processes.

## Description

### Field of the invention

The present invention is related to a system for providing a configurable service to a customer. In particular, it is related to providing telecom services which are continuously tailored to the customer's wishes.

### State of the art

Service providers (xSPs) such as ISPs (Internet Service Providers), ASPs (Access Service Providers) and more in general Telecom service providers, usually have an important number of available products, which are usually configurable to address the client's precise wishes. In the case of configurable services, i.e. services of which some or all the characteristics are set by parameters, the order originating from the client does not result in a new product but merely in an adaptation of an existing product. When only one product is configured only once, there is no problem for billing the services delivered. However, the demand for flexible, configurable services is increasing and this demand should be met at the lowest possible end-user cost while keeping control of billing for the requested services.

### Problem definition and aims of the invention

The client should be able to change nearly all the parameters of the product to perfectly suit his needs at a certain moment. This entails a lot of changes of parameters on a permanent or a temporary basis, and no flat rate billing can be used.

A problem associated with such a configurable product is that the adaptation of an existing service to the novel needs of a client as expressed in an order is not clearly defined. Usually, there are lots of different procedures that can be followed to obtain the requested result, and most of these are not cost-efficient. As in practically all cases the changes are non-standard changes, these changes will be undocumented and will probably be executed in an inefficient way.

Also, the billing system that has to be used for such a product is complex, and especially when a lot of configuration updates are requested and executed, the precise billing of the services provided is usually impossible to do in a cost-efficient way. Usually, the client will be undercharged, which leads to a lower profit margin for the xSP.

The known systems do not allow for a cost-efficient billing of clients that regularly update a configurable product.

Another problem associated with selling configurable products is that the client usually expects a specific service which is different from the provided service and which is again different from the billed service. This is due to the fact that usually, the technical execution of the service and the billing of the service are usually done by different divisions of the xSP or even by different companies, e.g. in the case that the product comprises special services (supplied by e.g. an ISP) for which a specific physical connection is needed (provided by an ASP). Also, in these complex cases, it is virtually impossible to provide a clear description of the actual provided service at a certain time to the client.

Also, the fact that configurable products can be changed considerably (e.g. bandwidth changes) over a short period does not allow decent network planning for the xSP. This will lead to unbalanced load of the network, oversaturation of the network or overinvestment in oversized network capacity to avoid oversaturation.
Another problem associated with the state of the art is that, especially in the case of a highly configurable product, it is very difficult to provide a pricing structure that is clear for both client and supplying company and/or reseller, especially when price quotes for service changes have to be given, as this depends on the previous services rendered and on the client's contract. Therefore, it is difficult for the sales department to provide the client with all necessary pricing information. A solution is to use a simplified pricing structure, but this usually leads to an underestimation of the costs and thus loss of profit margin.

The present invention aims to provide a novel system for providing a configurable product, which can be reconfigured at any given moment, to a customer in a cost-efficient and automated way.

### Summary of the invention

The present invention is a knowledge system for providing a configurable service to a customer, said knowledge system being compiled on a computer environment or stored on a memory carrier and comprising:
- a knowledge base comprising
   - representations of a number of business elements involved in the providing of said service, including representations of actors, of predetermined relations between said actors, of processes optionally having involved said actors, of input/output specifications for said processes, and
   - configurable key objects as representations of the business elements needed in the definition and/or configuration and/or realisation of said service;
- at least one predetermined event, each event triggering the execution of a predetermined set of said processes associated with said event and being executed according to a set of predetermined rules associated with said event, the execution defining a status of said service;
- and wherein said key objects have a level of consonance with at least one other key object allowing the use and or adaptation of key objects being subsequently activated following the execution of said predetermined set of processes triggered by said event, the adaptation being done according to the contents of a previous key object in the execution of said predetermined set of processes.

The business elements comprise all information, resources, rules, ... that are necessary to provide the configurable service. The actors comprised in said business elements are all actors that play a role in the production of the service, including the customer, even a potential customer. Processes for providing the service are also included in the business elements. Examples are processes comprising sequential steps (order intake - order processing - technical realisation - billing), each of which is again further defined as a process. Also rules, which apply to the processes and/or actors and/or resources, are comprised in the business elements. The resources are the technical and/or human resources that are necessary for providing the service.

The predetermined events comprise every event that changes the overall system situation. Most actions by a customer and by the service provider are events, which can be anticipated and are implemented in the knowledge system. Events can comprise a new customer's order or request for a price quote, or known customer's orders for adaptation (like an upgrade to higher bandwidth), termination, or temporary upgrades (e.g. when an extra access port for a limited time). Other examples of events comprise the status of the service (technical problems, error messages). Resource management can also be directed with events according to the present invention.

The key objects that are referred to represent the business elements in the events. Examples of key objects are products, orders, subscriptions, price quotes, bills, contracts, product descriptions, etc... . These key objects have a certain degree of consonance with each other, i.e. the content of some key objects will influence the content of other key objects.

Said key objects are usually selected from the group consisting of configurable service order, configurable product description and invoice.

The system of the present invention is especially advantageous if the service to be produced is a substantially permanent service, the status of said service being part of said system and the service being adaptable following another event. This is the case for a service that is continually provided, such as access to a Virtual Private Network. When adapting parameters of such a service, one should not implement the changes from scratch, but based on the current status of the system. The changes that have to be configured depend thus on the situation of the system when the order is placed.

In a preferred embodiment, the knowledge system of the invention further comprises roles for said actors in said processes. These are functions, definitions and rules that are necessary to define the meaning of the actors in view of the processes.

Further, the business elements usually comprise resources for providing the service. This allows foreseeing the needs in resources at any time. For example, this allows one to anticipate an upgrade of a resource at the customer level as a result of a request for higher bandwidth at the moment the order is placed by the customer. Further, in more complicated services such as providing access for a plurality of customers, resources can be closely monitored and future resource needs can be more accurately assessed, so that possible problems such as insufficiency of network capacity can be addressed before the capacity is actually needed.

In an advantageous embodiment, said predetermined event is adapted to create or adapt key objects based upon an order from the client, said order comprising information to define and/or configure and/or realise said configurable service.

The knowledge base as in the system of the invention can further comprise a service status representing the status of services provided to a specific customer at any time in the past, present or future. This service status can be seen as a history of services produced for a customer. It comprises a complete description of the service from the creation of the service to the termination of the service. It is clear that such a service status is in correspondence with the customer's order, with the actually rendered services and with the billing.

Further, a customer interface arranged to enable customers to transmit an order for a configurable service can be provided in a system according to the present invention. Said interface can e.g. be a WWW interface, umts interface, or WAP interface. Simple orders (those that do not require technical intervention by personnel) can be executed in real-time this way, while more complicated orders can be processed and resources can be reserved or added to provide the service.

In a preferred embodiment, the configurable service is a Virtual Private Network. The parameters that can be set comprise parameters determining access to the Virtual Private Network, number of access ports, protocol, available bandwidth, network type and security provisions.
Said protocol can be selected from the group consisting of IP, IPX, DecNet, SNA and Transparent Bridging. Said network type can be selected from the group consisting of Ethernet, Fast Ethernet and Token Ring. Further, the bandwidth can be configured to lie between e.g. 64K and 2Mb.

The knowledge system of the invention can, in an advantageous embodiment, further comprise customer services, such as service windows, service levels, service warranties, service reporting and service discount levels. Service windows define when the service is available. The service can e.g. only be needed during office hours, opening hours (in the case of a shop), or 24 hours a day. Service levels refer to the quality of the management of the system e.g. timeto-react (TTR) when faults occur. Service Warranties define the guaranteed quality of the service. Service reporting is important to inform the customer of the service status or when troubleshooting when the service is working erroneously. Preferably, said service reports are available for the customer via a convenient interface such as a WWW, WAP or UMTS interface at any time, so that the customer can always check the status of the service from anywhere. Service Discount information can also be available. Using such information, correct invoicing can be applied in any case, such as high volume discounts for resellers, or promotion sales on which the normal tariffs do not apply.

The knowledge system further comprises an event bus providing a communication path between different elements of said knowledge system in a specific embodiment of the invention. This is especially advantageous when the knowledge system is used by different resellers. The Event bus is adapted to receive orders and messages from resellers, and transfer it to the knowledge base, which will start processing the data using events.

In a preferred embodiment of the present invention, said knowledge base is at least partly implemented in an object oriented programming environment and contains classes of objects that define and/or configure and/or create business elements of a telecommunication operator and key objects needed in the definition and/or configuration and/or realisation of said service. In this case, the system can also further comprise a service status representing the status of services provided to a specific customer at any time in the past, present and future, as explained higher. Advantageously, said service status is implemented as an object, and said event is at least partly implemented as a method on said service status.

In that case, an event can create a new instance of said service status.

Another aspect of the present invention is a method for providing a configurable service to a customer, comprising the steps of:
- Providing a knowledge system according to the invention, and
- Producing said configurable service based on business elements provided by the knowledge system and the customer using the predetermined events of the knowledge system.

Another aspect of the present invention is a method for providing access to a knowledge system as recited above, wherein a service provider provides an interface arranged to access said knowledge system for providing a configurable product to a customer. Said interface can be a WWW, WAP or UMTS interface.

Another embodiment of the present invention is a method for providing a configurable Virtual Private Network system to a customer, comprising the steps of
- Providing a knowledge system according to the present invention, and
- Providing a virtual private network service to said customer based on an order processed by said knowledge system.

Another embodiment is the use of a virtual private network provided by the above-mentioned method.

Another embodiment is a computer program comprising program code means for performing all the steps as recited in the method of the present invention when said program is run on a computer.

Another embodiment is a computer program product comprising program code means stored on a computer readable medium for performing the method the present invention when said program product is run on a computer.

### Short description of the drawings

Fig. 1 represents a knowledge system 1 according to the present invention.

Fig. 2 represents a preferred embodiment of the invention.

Fig. 3 shows several objects that are so-called " product objects" .

Fig. 4 shows an example of a data structure for defining account and contract types.

Fig. 5 represents a possible data structure for creating party objects.

Fig. 6 shows a datastructure representing order objects.

### Detailed description of the invention

The present invention will be further clarified with a practical example of a knowledge system according to the present invention. An example of a configurable service is a Virtual Private Network (VPN). A VPN is completely parameterisable: the access to the VPN (protocol, number of access ports...), the available bandwidth, security provisions... are all characteristics of the VPN service which can be tailored to the client's wishes. The example will describe a knowledge system for providing a telecom service, more particularly a VPN service to a customer.

### 1. Overall description of a knowledge system according to the present invention:

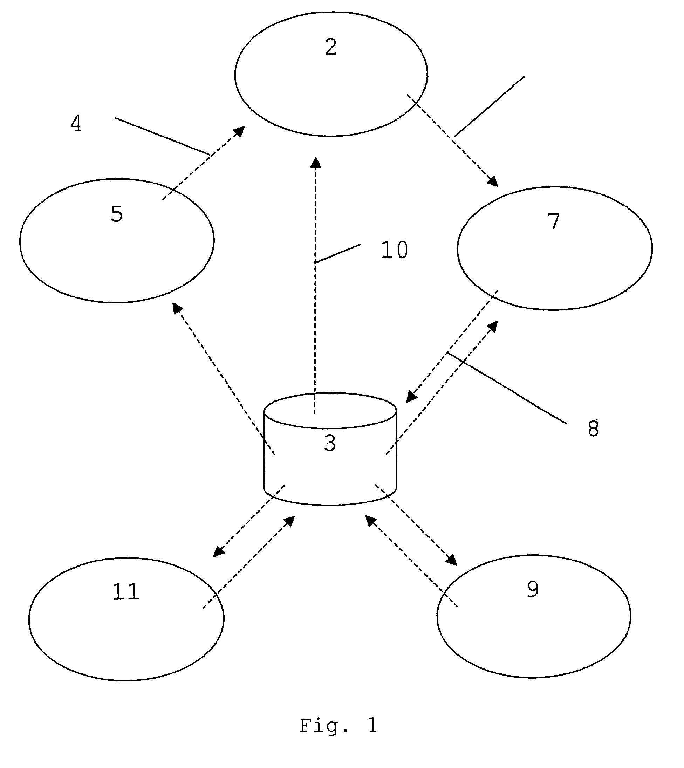

Fig 1 represents a knowledge system 1 according to the present invention. It comprises a knowledge base 3, which comprises all the necessary information for providing the service. All events (dotted arrows) need information from the knowledge base to be executed. Therefore, all departments that are involved in providing the service are in connection with said knowledge base 3. Typically, these departments are Sales 5, Registration 7, Execution 9 and Billing 11. The customer 2 is an actor in the system and can send information to the system and receive information from the system.

On a potential customer's request, a contract offer or service proposition can be forwarded by the Sales department 5 to the customer 2 (4). The customer can agree to a contract or can place an order (6), which is processed by Registration department 7 (which can be fully automated via e.g. a user interface such as a WWW, WAP or UMTS interface) and registered in the system (8) as business elements. Execution and billing are then done on the basis of the business elements provided by the system. The customer can directly verify the parameters of the requested service by accessing the knowledge system (10), preferably via an interface such as a WWW, WAP or UMTS interface (not shown).

### 2. Description of the business elements

The most important business elements are the actors, processes and rules and the interrelationships between these. Configurable key objects represent the business elements.

Actors refer to defined information-providing or information-requesting entities and are used in the processes. Examples are the customer, who provides the order, the Service Provide, the contract as made up between both parties and the available resources at a certain time.

### 3. Events

Several event types can be defined.

A contract gives rise to a service. Said service can be changed by an order of the customer. The creation of said service comprises several events.

A first event type is the preparation of a new service offer to a new customer. Usually, this service offer will be an offer for a standard service, although a tailored solution can also be provided at this stage.

Another event type is the registration of an order placed by a customer. Following said order, the order will be registered in the knowledge base and a description of the technical procedure that has to be followed will be created. This description will enable the Service Provider to realise the order. The production department thus not directly interprets the order, but receives a description of the implementation of the service.

The invoices for the services are also prepared using the knowledge base, more particularly the service status that describes the actual status of the service at any moment in time. For the preparation events can be used.

Whenever an event involves changing the service, said event also comprises making the appropriate changes in the service status.

### 4. Resource management

Resources can be efficiently managed when using a knowledge system according to the present invention. The service status, which comprises the current service description but also the description of future services, with resources that are necessary for implementing said service. Further, in combination with data such as life-cycle stages, seasonal demand and historical demand, resources can be managed in a more precise manner and thus less overcapacity is needed to avoid oversaturation of the resources.

### Description of a preferred embodiment of the invention

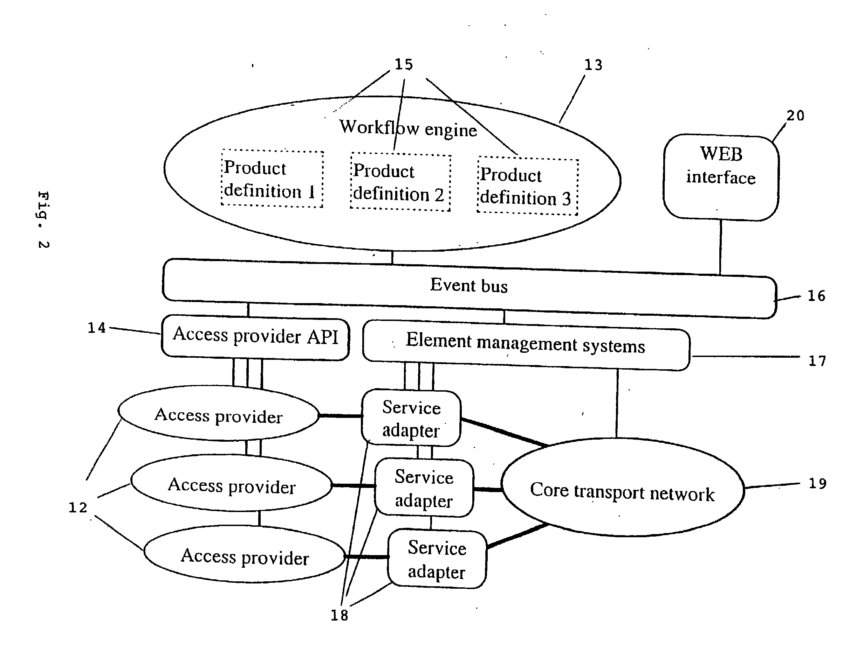

A preferred embodiment of the invention is shown in fig. 2.

In this figure, a set-up for a knowledge system according to the invention can be seen in which the system is used by several access providers. The knowledge system itself is implemented by the service provider. Access providers serve thus as resellers for the services offered by the service provider.

The implementation of the knowledge system according to this preferred embodiment comprises a workflow engine 13, comprising the knowledge base according to the present invention. Product definitions 15 represent possible configurations of services and form part of the knowledge base. Access providers 12, who are responsible for the relation with the customer, access the knowledge base through an access provider API 14 via event bus 16. Orders from customers are communicated to the knowledge base through said events bus 16, processed in the workflow engine 13 using the rules, processes and actors provided in the knowledge base and by using the predetermined events of the knowledge base to provide an intermediate product, defining the execution of the order, which is again sent through the event bus. The intermediate product is then received by an Element management system 17, which is arranged to implement the intermediate product's definition to provide the desired configurable service to the customer, by configuring all business elements in such a way that on the core transport network 19 the configurable service is implemented. The access providers 12 can then provide access to the service for the customer through service adapters 18. Preferably, a Web interface 20 or UMTS or WAP interface is provide through which service status information can be requested or through which an order can be sent to a specific access provider. Communication signals sent by the interface 20 to the knowledge system or Access providers are routed by the event bus 16.

### Implementation using object-oriented programming:

Preferably, the knowledge system of the present invention is implemented using object-oriented programming. An overview of example objects and their functionality will be given next.

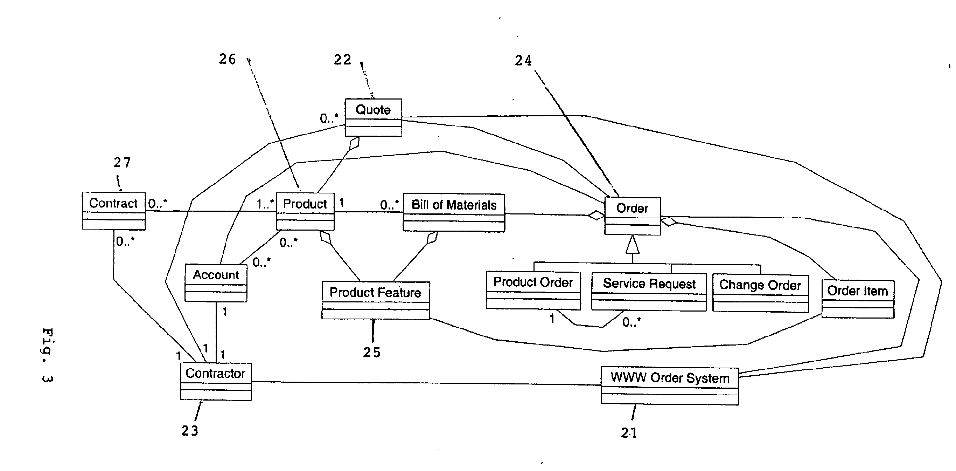

Fig. 3 shows several objects that are so-called " product objects" . A WWW order system 21 managed by a contractor 23 will give rise to two kinds of objects: quote objects 22 and order objects 24. An order will create a product feature list 25, which is implemented in a product 26. The precise conditions of the quotes and orders are usually influenced by the instance of contract 27, specifying special condition for the current customer.

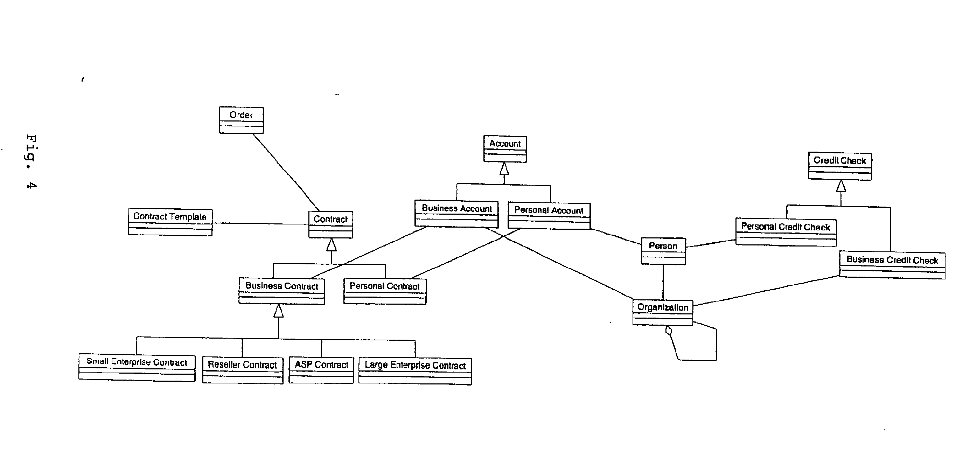

Fig. 4 shows an example of a data structure for defining account and contract types. A difference is e.g. made between business contracts/accounts and personal contracts/accounts. Business contracts and accounts are even further subdivided (Large, small enterprise, reseller contract,...). These objects provide suitably parametrized contracts tailored for the specific customer. Credit check is also included in this data structure.

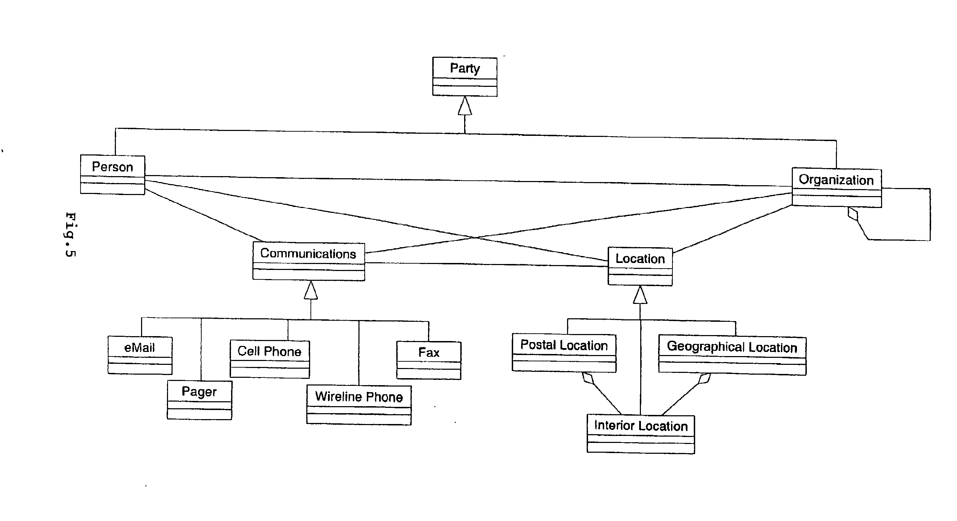

Fig. 5 represents a possible data structure for defining party objects. A party (to a contract or an account) can be a person or organisation. These have communication parameters (email address, pager, cell phone,...) and location parameters (address, location).

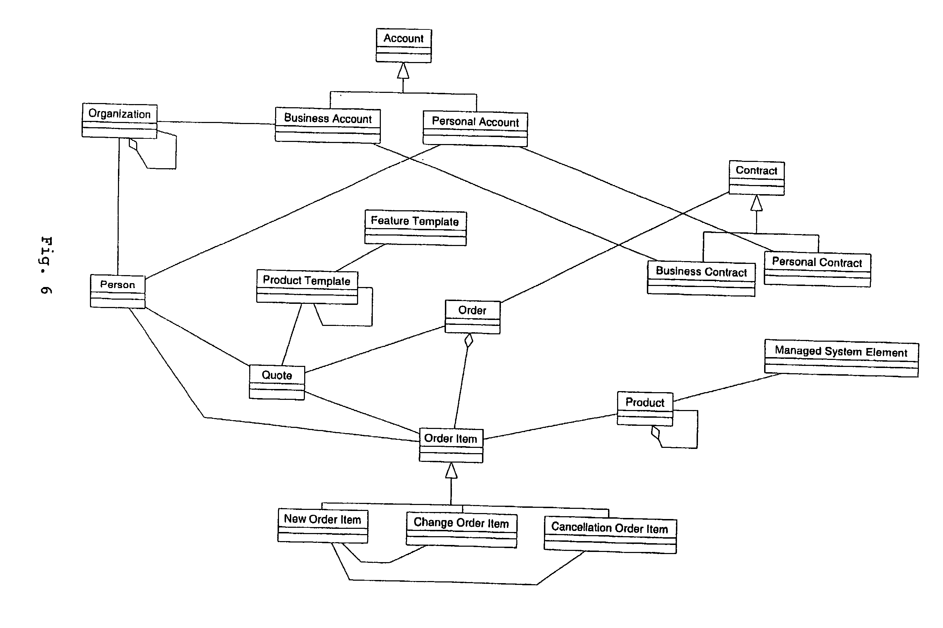

Fig. 6 shows a data structure representing order objects. An account is created on the basis of product templates, account information (business or personal), both based on information contained in the order. The order will further give rise to a contract, and evidently to the desired product.

Likewise, data structures using objects can be created to solve authorisation issues, and for more detailed product structures, like for providing a VPN service. It is evident that the complete data structure is linked and that the objects are consonant with each other, i.e. one object can influence the content of another object.

### Example of implementation environment

In a preferred embodiment of the present invention, the knowledge system can conveniently be implemented on a NGOSS™ (New Generation Operating System and Software). Specifications can be obtained from the TeleManagement Forum's website (http://www.tmforum.org).

NGOSS™ is based on commercial information technologies and not on proprietary technologies unique to the telecommunications industry. Due to this, a reduced development cost and improved software reuse and operational flexibility is obtained. Further, NGOSS™ is designed to easily integrate with other (existing) systems. It provides basically a process flow control environment, which e.g. service providers can use as a base to develop their functional applications on, tailoring said functional application to their specific and unique business processes. A major advantage is that said functional applications can also be written using accessible off-the-shelf software, promoting fast and easy development of interoperable and reusable software components. This way, the business process specification is in the hands of the service provider, while the process flow control environment is provided by the NGOSS™ and all process flow related issues are already solved in the NGOSS™.

The NGOSS™ can conveniently be used as a base architecture for implementation of the knowledge system of the present invention.

In a best mode embodiment of the invention, the knowledge system can be implemented on the Configure-to-Fit (CTF) software system as offered by the company KPMG.
The software system is publicly available such as through requests via http://www.kci-cft.com/
or
http://www.kpmgconsulting.com/kpmgsite/industry/cc/C2Final.pdf
<http://kpmgconsulting.com/kpmgsite/industry/cc/C2Final.pdf In the Configure-to-Fit (CTF)software package, KPMG Consulting offers a pre-architected solution that delivers an integrated end-to-end business solution for OSS/BSS process and technology integration. CTF integrates technology to enable flow through provisioning of both the operational and business support systems needed to deliver new services. CTF supports multiple access technologies such as DSL and Cable and multiple services such as VoIP, application hosing and IP VPN.

## Claims

1. A knowledge system for providing a configurable service to a customer, said knowledge system being compiled on a computer environment or stored on a memory carrier and comprising :
- a knowledge base comprising
- representations of a number of business elements involved in the providing of said service, including representations of actors, of predetermined relations between said actors, of processes optionally having involved said actors, of input/output specifications for said processes, and
- configurable key objects as representations of the business elements needed in the definition and/or configuration and/or realisation of said service;
- at least one predetermined event, each event triggering the execution of a predetermined set of said processes associated with said event and being executed according to a set of predetermined rules associated with said event, the execution defining a status of said service;
- and wherein said key objects have a level of consonance with at least one other key object allowing the use and or adaptation of key objects being subsequently activated following the execution of said predetermined set of processes triggered by said event, the adaptation being done according to the contents of a previous key object in the execution of said predetermined set of processes.

2. The knowledge system as recited in claim 1 wherein said service is a substantially permanent service, the status of said service being part of said system and the service being adaptable following another event.

3. The knowledge system as recited in claim 1 wherein said knowledge base further comprises roles for said actors in said processes.

4. The knowledge system as recited in claim 1 wherein the business elements comprise resources for providing the service.

5. The knowledge system as recited in claim 1, wherein said key objects are selected from the group consisting of configurable order, configurable product description and invoice.

6. The knowledge system as recited in claim 1 wherein said predetermined event is adapted to create or adapt key objects based upon an order from the client, said order comprising information to define and/or configure and/or realise said configurable service.

7. The knowledge system as recited in claim 1, wherein said knowledge base further comprises a service status representing the status of services provided to a specific customer at any time in the of past, present and future.

8. The knowledge system as recited in claim 1 further comprising a customer interface arranged to enable customers to transmit an order for a configurable service.

9. The knowledge system as in claim 8, wherein said interface is selected from the group consisting of WWW interface, umts interface, and WAP interface.

10. The knowledge system as in recited in claim 1, wherein the configurable service is a Virtual Private Network.

11. The knowledge system as in claim 10, further comprising parameters determining access to the Virtual Private Network, number of access ports, protocol, available bandwidth, network type and security provisions.

12. The knowledge system as recited in claim 11, wherein said protocol is selected from the group consisting of IP, IPX, DecNet, SNA and Transparent Bridging.

13. The knowledge system as recited in claim 11, wherein said network type is selected from the group consisting of Ethernet, Fast Ethernet and Token Ring networks.

14. The knowledge system as recited in claim 11, wherein said bandwidth can be configured to lie between 64K and 2Mb.

15. The knowledge system as recited in claim 1, further comprising customer services.

16. The knowledge system as in claim 15, wherein said customer services are selected from the group consisting of service window, service level, service warranty, service reporting and service discount level.

17. The knowledge system as recited in claim 1, further comprising an event bus providing a communication path between different elements of said knowledge system.

18. The knowledge system as recited in claim 1, wherein said knowledge base is at least partly implemented in an object oriented programming environment and contains classes of objects that define and/or configure and/or create business elements of a telecommunication operator and key objects needed in the definition and/or configuration and/or realisation of said service.

19. A knowledge system as in claim 18, further comprising a service status representing the status of services provided to a specific customer at any time in the of past, present and future.

20. A knowledge system as in claim 19, wherein the service status is implemented as an object, and said event is at least partly implemented as a method on said service status.

21. A knowledge system as in claim 20, **characterised in that** an event creates a new instance of said service status.

22. A method for providing a configurable service to a customer, comprising the steps of:
- providing a knowledge system as in claim 1;
- producing said configurable service based on business elements provided by the knowledge system and the customer using the predetermined events of the knowledge system.

23. Method for providing access to a knowledge system as recited in claim 1, wherein a service provider provides an interface arranged to access said knowledge system for providing a configurable product to a customer.

24. Method as in claim 23, wherein said interface is a WWW, WAP or UMTS interface.

25. A computer program comprising program code means for performing all the steps as recited in claim 22 when said program is run on a computer.

26. A computer program product comprising program code means stored on a computer readable medium for performing the method of claim 22 when said program product is run on a computer.

27. Method for providing a configurable Virtual Private Network system to a customer, comprising the steps of
• providing a knowledge system as in claim 1, and
• providing a virtual private network service to said customer based on an order processed by said knowledge system.

28. Use of a virtual private network provided by the method of claim 27.
